# FASCICULE DE BREVET EUROPEEN

(11) **EP 1 094 580 B1**
(45) Date de publication et mention de la délivrance du brevet: **28.09.2011**
(21) Numéro de dépôt: 00402741.3
(22) Date de dépôt: 05.10.2000
(51) Int. Cl.: H02G 3/04, H02G 3/06

(54) **Goulotte équipée d'au moins un accessoire, et accessoires correspondants, notamment pour appareillages électriques**
Kabelkanal mit zumindest einem dazugehörigen Zubehör, insbesondere für ein elektrisches Gerät
Channel with at least an accessory and corresponding accessory, for an electrical apparatus

(30) Priorité: 18.10.1999 FR 9912964
(43) Date de publication de la demande: 25.04.2001
(73) Titulaire: Legrand France, 87000 Limoges (FR); Legrand SNC, 87000 Limoges (FR)
(72) Inventeur: Decore, Bertrand, 72650 La Chapelle Saint Aubin (FR); Decore, Raphael, 72140 Parennes (FR)
(74) Mandataire: Santarelli

(56) Documents cités:
- DE-U- 7 836 010
- FR-A- 2 731 496
- GB-A- 932 453
- GB-A- 2 174 254

## Description

La présente invention concerne d'une manière générale les goulottes du type de celles mises en oeuvre, par exemple, pour le support, le logement et la protection de divers appareillages, et, en particulier, de divers appareillages électriques, aussi bien que pour le support, le logement et la protection des câbles, conducteurs, canalisations ou autre équipement nécessaires à la desserte de ces appareillages.

Ainsi qu'on le sait, une goulotte présente, par définition, un socle, de section transversale ouverte, par lequel se fait sa fixation à une quelconque paroi, par exemple un mur, et un couvercle qui, pour la fermeture de ce socle, est à rapporter de manière amovible sur celui-ci, par exemple par simple encliquetage.

L'invention vise plus particulièrement le cas où le volume intérieur de la goulotte, ou, plus exactement, celui de son socle, auquel cependant le précédent sera ici systématiquement assimilé pour plus de simplicité, est fragmenté, transversalement, en au moins deux compartiments, qui courent longitudinalement, parallèlement l'un à l'autre, et par exemple côte à côte, et qui sont séparés l'un de l'autre par au moins une cloison, dite ici cloison de compartimentage, avec, associés chacun respectivement à ces compartiments, autant de couvercles.

L'un de ces compartiments, dit ici compartiment d'installation, est dévolu à l'implantation des appareillages, tandis que l'autre, dit ici compartiment de câblage, est dévolu à celle des câbles ou conducteurs correspondants, en étant éventuellement lui-même fragmenté en deux ou plusieurs sous-compartiments lorsque, véhiculant des courants de tensions différentes, ces câbles ou conducteurs doivent eux-mêmes être préférentiellement séparés les uns des autres.

Grâce à une telle disposition, il est avantageusement possible d'intervenir indifféremment sur l'un des compartiments, sans nécessairement intervenir sur l'autre de ceux-ci.

En outre, pour chacun des compartiments, la hauteur, ou profondeur, est totalement disponible pour les appareillages ou les câbles ou conducteurs concernés, sans interférence entre ces appareillages ou ces câbles ou conducteurs.

En particulier, s'agissant du compartiment d'installation, le volume intérieur est totalement disponible pour les appareillages, sans avoir à faire circuler des câbles ou conducteurs en dessous ou à côté de ceux-ci, ce qui, pour ce qui concerne par exemple la hauteur, permet, les autres conditions étant égales par ailleurs, de minimiser au mieux la hauteur de l'ensemble.

Mais un problème se pose lorsque la goulotte doit être équipée d'un quelconque autre accessoire destiné, normalement, à intervenir transversalement sur toute sa largeur ou hauteur.

Il peut s'agir, par exemple, et il s'agit, ici, principalement, d'un accessoire d'angle du type de ceux mis en oeuvre pour établir toute la continuité souhaitable entre deux tronçons de goulotte cheminant chacun respectivement sur deux parois faisant entre elles un dièdre, l'angle correspondant étant communément appelé "angle extérieur" lorsque ce dièdre est un dièdre sortant, c'est-à-dire un dièdre saillant, et "angle intérieur" lorsque le dièdre correspondant est un dièdre rentrant.

Le document FR 2 731 496 décrit un tel accessoire d'angle pour le raccordement de deux tronçons de goulotte faisant un angle intérieur entre eux.

Mais il peut tout aussi bien s'agir d'un quelconque autre accessoire, tel que, par exemple, un joint de couvercle, un accessoire de passage ou un accessoire de dérivation, voire même un simple embout.

Dans la demande de brevet français qui, déposée le 4 décembre 1997 sous le No 97 15282, a été publiée sous le No 2 772 200, sont décrits des accessoires d'angle ou de dérivation, regroupés sous le vocable d"'accessoires de cheminement", comportant, sous la forme de pièces distinctes, d'une part, un corps, formant support, qui s'étend transversalement par rapport aux compartiments de la goulotte, et, d'autre part, un cache, avec, sur le corps, des moyens d'engagement par lesquels ces accessoires sont aptes à être solidarisés au socle de la goulotte à équiper, et, entre le corps et le cache, des moyens d'encliquetage par lesquels le cache est apte à être rapporté sur le corps.

Grâce à cette disposition, un compromis avantageux est trouvé entre, d'une part, une bonne facilité de montage et de démontage pour le cache, et, d'autre part, une tenue suffisante de celui-ci, c'est-à-dire une bonne résistance à la désolidarisation de ce cache par rapport au corps lorsqu'il est l'objet d'un quelconque choc, ce qui, notamment, les autres conditions étant égales par ailleurs, permet avantageusement un élargissement des tolérances de fabrication pour l'ensemble.

Dans la demande de brevet français No 97 15282, le corps des accessoires en cause s'étend transversalement sur la totalité des compartiments de la goulotte.

Lorsque le volume intérieur de celle-ci est fragmenté en compartiments, il interfère donc normalement avec le compartiment de câblage, au risque de minimiser de manière intempestive le volume utile de celui-ci.

La présente invention a d'une manière générale pour objet une disposition permettant d'éviter cet inconvénient.

Elle est fondée sur l'observation, a priori surprenante, que, dans la pratique, il est possible de réduire l'emprise du cache des accessoires en cause sur le corps sur lequel ce cache est rapporté sans cependant réduire pour autant la bonne tenue de ce cache.

De manière plus précise, la présente invention a tout d'abord pour objet une goulotte, qui, d'une part, est du genre comportant un socle dont le volume intérieur est fragmenté transversalement en au moins deux compartiments qui courent longitudinalement et qui sont séparés l'un de l'autre par au moins une cloison de compartimentage et des couvercles associés chacun respectivement à ces compartiments, et qui, d'autre part, est équipée d'au moins un accessoire qui s'étend transversalement par rapport à ses compartiments et qui comporte, sous la forme de pièces distinctes, un corps et un cache, avec, sur le corps, des moyens d'engagement par lesquels cet accessoire est apte à être solidarisé au socle de la goulotte, et, entre le corps et le cache, des moyens d'encliquetage par lesquels le cache est apte à être rapporté sur le corps, cette goulotte étant d'une manière générale caractérisée en ce que le corps de l'accessoire ne s'étend transversalement qu'à travers un nombre limité de compartiments sur une longueur inférieure à celle suivant laquelle s'étend son cache.

Elle a encore pour objet tout accessoire, et, notamment, tout accessoire d'angle, permettant la constitution d'une telle goulotte.

Ainsi, le cache d'un accessoire suivant l'invention s'étend normalement plus ou moins en porte à faux par rapport à son corps.

Mais, si désiré, ce cache peut également comporter, à distance du corps, des moyens d'engagement par lesquels, pour affermir sa tenue, il est apte à venir en prise avec le socle de la goulotte.

Quoi qu'il en soit, lorsque le volume intérieur de la goulotte est fragmenté en deux compartiments, le corps d'un accessoire suivant l'invention ne s'étend normalement, transversalement, qu'à travers le compartiment d'installation de cette goulotte, tandis que le cache de cet accessoire, qui peut par ailleurs être réalisé en une ou plusieurs parties, s'étend, lui, aussi bien sur le compartiment de câblage que sur ce compartiment d'installation.

Lorsque la constitution du socle de la goulotte le permet, un accessoire suivant l'invention peut également comporter, si désiré, suivant un développement de l'invention, en sus de son corps principal, pour affermir la tenue de son cache, un corps auxiliaire, qui s'étend alors transversalement au travers d'un ou plusieurs des compartiments contigus de celui au travers duquel s'étend le corps principal, et qui, comme celui-ci, comporte des moyens d'engagement par lesquels il apte à être solidarisé au socle de la goulotte.

Cela peut par exemple être le cas lorsque le socle de la goulotte comporte une aile latérale de hauteur suffisante, et, parallèlement à celle-ci, une cloison interne de hauteur comparable.

Il est alors en effet possible que le corps auxiliaire d'un tel accessoire s'étende en pont du bord libre de cette aile latérale au bord libre de cette cloison sans réduire de manière sensible le volume libre du ou des compartiments sous-jacents.

Suivant l'invention, cette disposition est applicable notamment à un joint de couvercle.

Les objets de l'invention, leurs caractéristiques et leurs avantages ressortiront d'ailleurs de la description qui va suivre, à titre d'exemple, en référence aux dessins schématiques annexés sur lesquels :
- la figure 1 est une vue en perspective d'une goulotte suivant l'invention lorsque les deux accessoires qui l'équipent sont des accessoires d'angle assurant la constitution d'un angle extérieur ;
- les figures 2 et 3 sont des vues en coupe transversale de cette goulotte suivant, chacune respectivement, les lignes II-II et III-III de la figure 1;
- la figure 4 est une autre vue en perspective de la goulotte suivant l'invention, après enlèvement de ses couvercles et des caches des deux accessoires d'angle qui l'équipent ;
- la figure 5 est une vue en perspective du corps d'un de ces accessoires d'angle, représenté isolément, et vu de l'avant ;
- la figure 6 est une autre vue en perspective de ce corps, vu de l'arrière ;
- la figure 7 en est une vue en coupe, suivant la ligne VII-VII de la figure 5;
- la figure 8 en est, à échelle supérieure, et de manière partielle, une autre vue en coupe, suivant la ligne VIII-VIII de la figure 5 ;
- la figure 9 est une vue en perspective du corps de l'autre des accessoires d'angle concernés ;
- la figure 10 est une vue en coupe de ce corps, suivant la ligne X-X de la figure 9 ;
- la figure 11 en est, à échelle supérieure, une autre vue en coupe, suivant la ligne XI-XI de la figure 9 ;
- la figure 12 est une vue en perspective, et vu de l'arrière, du cache associé au corps représenté sur la figure 5 ;
- la figure 13 est, de manière semblable, une vue en perspective du cache associé au corps représenté sur la figure 9 ;
- la figure 14 est une vue en perspective d'une goulotte suivant l'invention lorsque les deux accessoires qui l'équipent sont des accessoires d'angle assurant la constitution d'un angle intérieur ;
- la figure 15 est une autre vue en perspective de cette goulotte lorsque, comme sur la figure 4, les couvercles de la goulotte et les caches de deux accessoires d'angle qui l'équipent ont été enlevés ;
- la figure 16 est une vue en perspective du corps d'un de ces accessoires d'angle, représenté isolément, et vu de l'avant ;
- la figure 17 est une vue en coupe de ce corps, suivant la ligne XVII-XVII de la figure 16 ;
- la figure 18 est une vue en perspective du corps de l'autre des accessoires d'angle concernés, vu de l'avant ;
- la figure 19 est une vue en perspective, et vu de l'arrière, du cache associé au corps représenté sur la figure 16 ;
- la figure 20 est une vue en perspective, et également vu de l'arrière, du cache associé au corps représenté sur la figure 18 ;
- la figure 21 est une vue en perspective d'une goulotte suivant l'invention lorsque l'accessoire qui l'équipe est un joint de couvercle ;
- la figure 22 est une autre vue en perspective de cette goulotte lorsque, comme sur les figures 4 et 15, le cache correspondant, ici en deux parties, a été enlevé, et qu'il en a été de même pour ses couvercles sur l'un de ses tronçons ;
- la figure 23 est une vue en perspective d'une des parties constitutives du corps principal de l'accessoire en cause, vue de l'avant ;
- la figure 24 est une autre vue en perspective de cette partie de ce corps, vue de l'arrière ;
- les figures 25 et 26 sont des vues en perspective qui, correspondant chacune respectivement aux figures 23 et 24, se rapportent à une deuxième partie du corps de cet accessoire ;
- les figures 27 et 28 sont des vues en perspective qui, correspondant, elles aussi, chacune respectivement, aux figures 23 et 24, se rapportent à une troisième partie de ce corps ;
- la figure 29 est une vue en perspective d'un corps auxiliaire que comporte, en l'espèce, l'accessoire en cause, vu de l'avant ;
- la figure 30 est une autre vue en perspective de ce corps auxiliaire, vu de l'arrière ;
- la figure 31 est une vue en perspective d'une des parties constitutives du cache de l'accessoire en cause, vue de l'arrière ;
- la figure 32 est une vue en perspective de l'autre des parties constitutives de ce cache, également vue de l'arrière ;
- la figure 33 est une vue en coupe transversale d'une goulotte suivant l'invention lorsque l'accessoire qui l'équipe est un accessoire de passage ;
- la figure 34 est une vue en perspective d'un accessoire de dérivation susceptible d'équiper également une goulotte suivant l'invention, vu de l'avant ;
- la figure 35 est une vue en perspective du cache alors associé à un tel accessoire de dérivation, vu de l'avant.

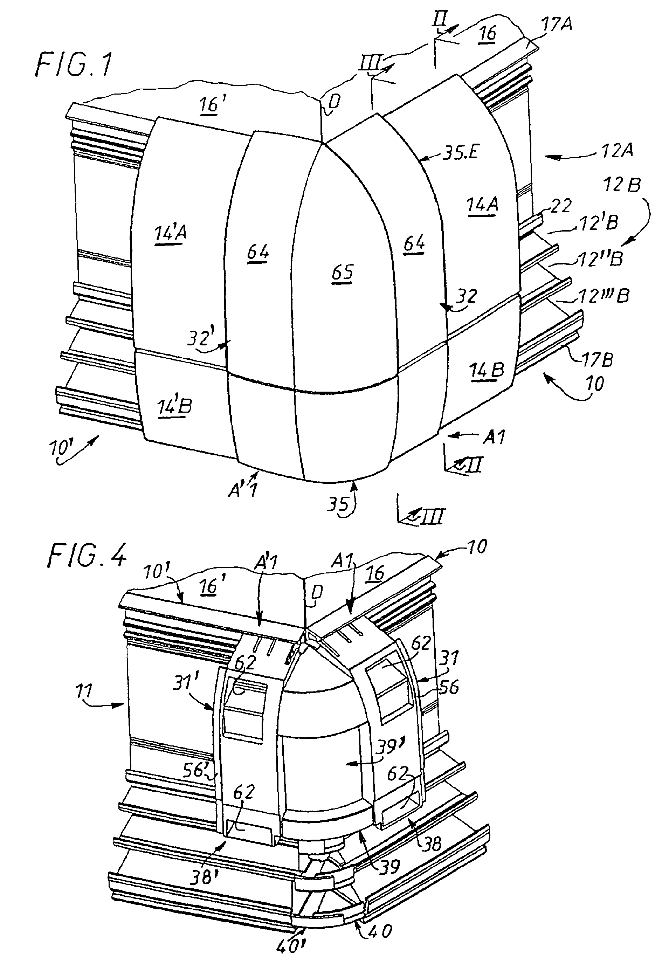

Sur les figures 1 à 4, 14, 15, 21, 22, et 33, on reconnaît, sous la référence générale 10, une goulotte du genre comportant, de manière connue en soi, d'une part, un socle 11, dont le volume intérieur est fragmenté en au moins deux compartiments 12A, 12B par au moins une cloison de compartimentage 13, et, d'autre part, des couvercles 14A, 14B associés chacun respectivement à ces compartiments 12A, 12B, à raison d'un par compartiment 12A, 12B.

De manière également connue en soi, le socle 11 comporte un fond 15 plat, par lequel il est adapté à être appliqué à une quelconque paroi 16, par exemple, et tel que représenté, un mur à la base duquel la goulotte 10 court en plinthe.

Le socle 11 comporte, en outre, le long des bords longitudinaux de ce fond 15, sensiblement perpendiculairement à celui-ci, deux ailes latérales 17A, 17B.

Dans la forme de réalisation représentée, ces ailes latérales 17A, 17B sont de hauteurs très différentes.

Par exemple, et tel que représenté, l'aile latérale 17A, qui est celle qui s'étend le long du bord longitudinal supérieur du fond 15, a une hauteur très largement inférieure à celle de l'aile latérale 17B opposée.

Dans la forme de réalisation représentée, seuls deux compartiments 12A, 12B sont prévus, et ils sont contigus.

Par voie de conséquence, seule intervient, entre ces compartiments 12A, 12B, une cloison de compartimentage 13.

Le compartiment 12A supérieur est normalement dévolu à l'implantation de quelconques appareillages, et, en particulier, de quelconques appareillages électriques non représentés.

Il sera donc, dans ce qui suit, indifféremment appelé tantôt "compartiment 12A supérieur", et, tantôt, "compartiment d'installation 12A".

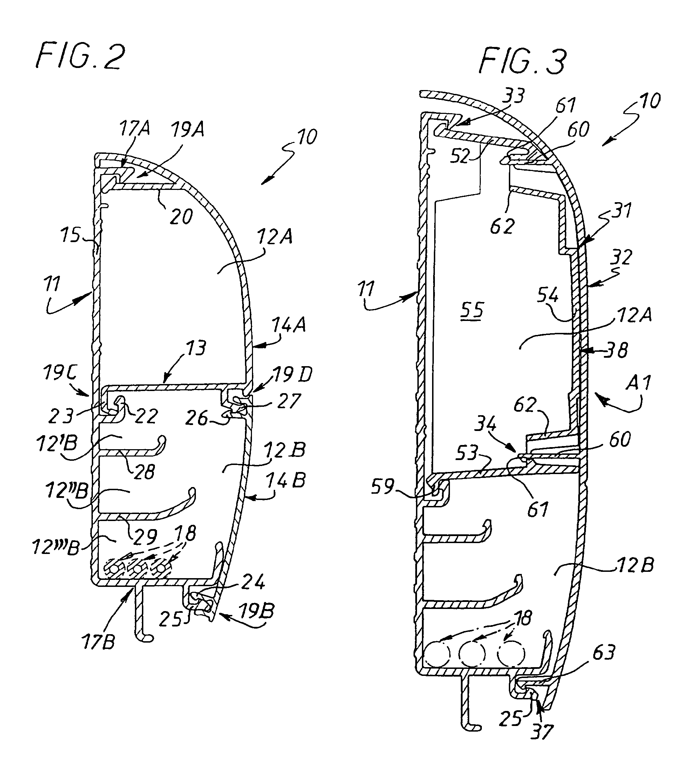

Le compartiment 12B inférieur est, lui, normalement dévolu à l'implantation de câbles ou de conducteurs 18, en l'espèce des câbles ou conducteurs électriques, tel que schématisé en traits interrompus sur les figures 2, 3 et 33.

Il sera donc indifféremment appelé, dans ce qui suit, tantôt "compartiment 12B inférieur", et, tantôt, "compartiment de câblage 12B".

Pour le maintien du couvercle 14A du compartiment 12A supérieur, il est prévu, entre le socle 11 et ce couvercle 14A, des moyens d'encliquetage 19A, 19C.

Les moyens d'encliquetage 19A interviennent entre l'aile latérale 17A du socle 11 et une languette 20 prévue à cet effet en saillie sur la surface intérieure du couvercle 14A.

Les moyens d'encliquetage 19C interviennent, eux, entre une console 22 prévue à cet effet en saillie sur le fond 15 du socle 11 et la cloison de compartimentage 13, celle-ci présentant en correspondance à cet effet à sa base un retour 23.

Pour le maintien du couvercle 14B du compartiment 12B inférieur, il est prévu des moyens d'encliquetage 19B, 19D.

Les moyens d'encliquetage 19B interviennent entre l'aile latérale 17B du socle 11 et une languette 24 que le couvercle 14B présente en saillie à cet effet sur sa surface intérieure, l'aile latérale 17B du socle 11 présentant elle-même, en correspondance, en saillie sur sa surface extérieure, une console 25.

Les moyens d'encliquetage 19D interviennent, eux, entre la cloison de compartimentage 13 appartenant au couvercle 14A du compartiment 12A supérieur et une languette 26 que le couvercle 14B présente à cet effet en saillie sur sa surface intérieure, parallèlement à sa languette 24 précédente, la cloison de compartimentage 13 présentant elle-même, en correspondance, à sa racine, parallèlement à son retour 23, une console 27.

Dans la forme de réalisation représentée, enfin, le compartiment 12B inférieur, ou compartiment de câblage, est lui-même subdivisé en sous-compartiments 12'B, 12"B, 12"'B par des cloisons 28, 29, qui, venues d'un seul tenant du fond 15 du socle 11, s'étendent parallèlement l'une à l'autre, à distance l'une de l'autre, et dont les hauteurs, toutes inférieures à la hauteur de l'aile latérale 17B de ce socle 11, sont elles-mêmes différentes l'une de l'autre, la hauteur de la cloison 28 la plus éloignée de l'aile latérale 17B étant inférieure à la hauteur de la cloison 29 la plus proche de celle-ci.

Les dispositions qui précèdent étant bien connues par elles-mêmes et/ou ne relevant pas de la présente invention, elles ne seront pas décrites plus en détail ici.

De manière connue en soi, enfin, la goulotte 10 est équipée d'au moins un accessoire A1, A'1, A2, A'2 ... etc..., qui s'étend transversalement par rapport à ses compartiments 12A, 12B, et qui comporte, sous la forme de pièces distinctes, un corps 31, 31' et un cache 32, 32' avec, et suivant des dispositions décrites plus en détail ultérieurement, sur le corps 31, 31', des moyens d'engagement 33 par lesquels cet accessoire A1, A'1, A2, A'2 ... etc... est apte à être solidarisé au socle 11 de la goulotte 10, et, entre le corps 31, 31' et le cache 32, 32', des moyens d'encliquetage 34 par lesquels le cache 32, 32' est apte à être rapporté sur le corps 31, 31'.

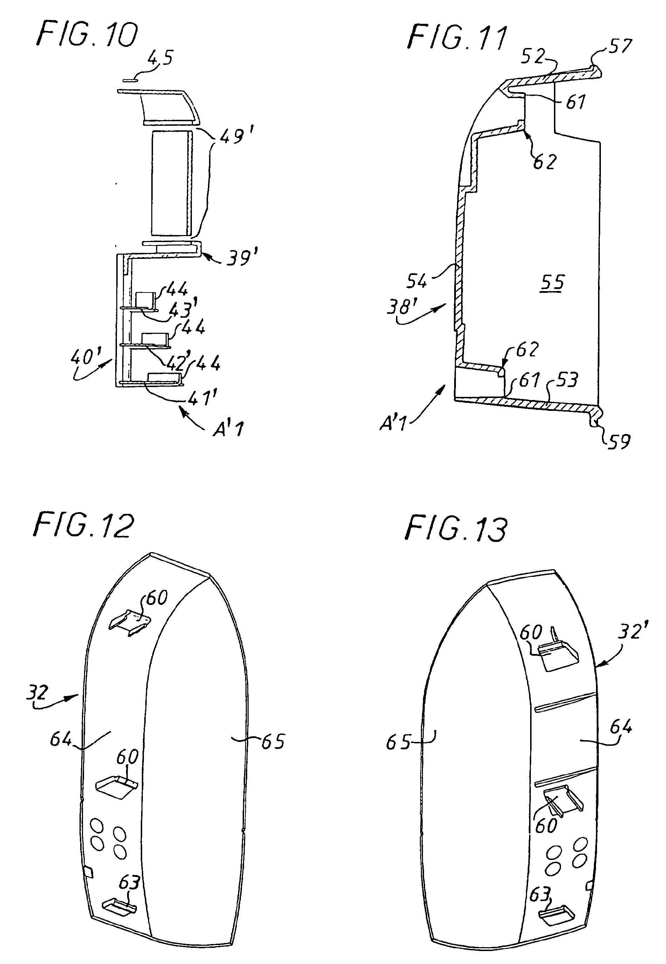

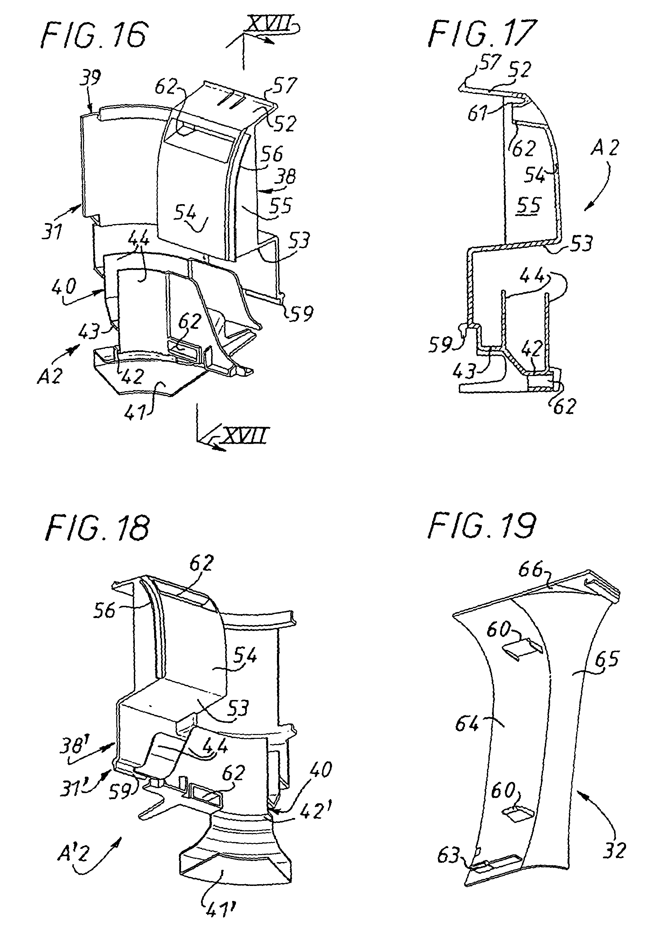

Par exemple, lorsque, comme représenté sur les figures 1 à 20, la goulotte 10 est implantée sur des parois 16, 16' faisant un dièdre d'arête D entre elles, en présentant successivement à cet effet des tronçons de goulotte 10, 10' d'orientations différentes, à raison d'un tronçon de goulotte 10, 10' par paroi 16, 16', il est prévu, au raccordement de ces tronçons de goulotte 10, 10', deux accessoires d'angle A1 (ou A2), A'1 (ou A'2), à raison d'un accessoire d'angle A1 ou A2, A'1 ou A'2 par tronçon de goulotte 10, 10', pour la constitution de ce qui est communément appelé un angle 35.E, 35.1.

Pour plus de simplicité, la goulotte 10 est identifiée à l'un et/ou l'autre des tronçons de goulotte 10, 10' qui la constituent.

C'est la raison pour laquelle l'un de ceux-ci porte ici la même référence qu'elle.

Sur les figures 1 à 13, l'angle 35.E est un angle extérieur, c'est-à-dire un saillant, et il est constitué d'accessoires d'angle A1, A'1.

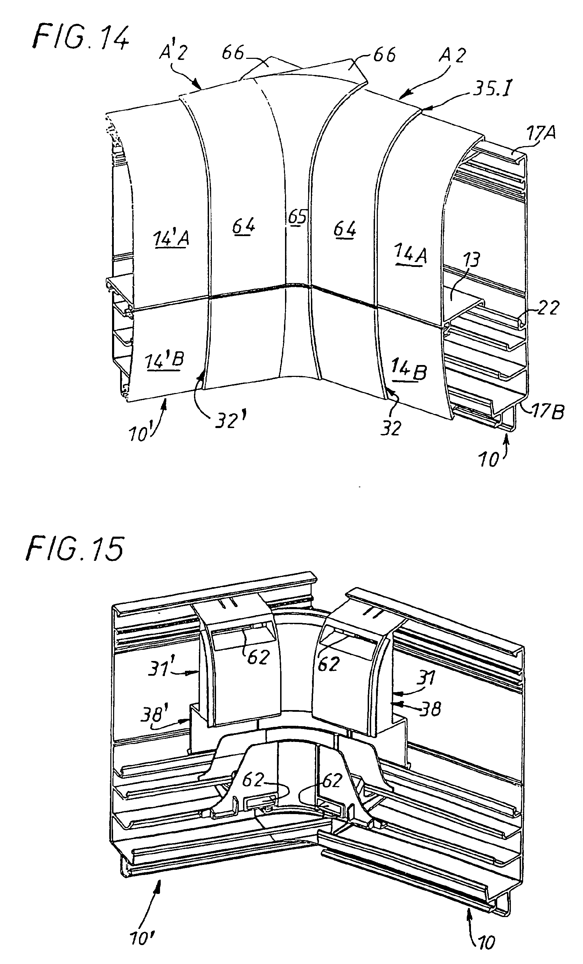

Sur les figures 14 à 20, l'angle 35.1 est un angle intérieur, c'est-à-dire un angle rentrant, et il est constitué d'accessoires d'angle A2, A'2.

Suivant l'invention, le corps 31, 31' d'un accessoire A1, A'1, A2, A'2 ... etc... équipant d'une manière générale la goulotte 10 ne s'étend transversalement qu'à travers un nombre limité de ses compartiments 12A, 12B, inférieur au nombre total de ceux-ci.

Préférentiellement, et cela est le cas dans les formes de réalisation représentées, lorsque, comme en l'espèce, le volume intérieur du socle 11 de la goulotte 10 est fragmenté en deux compartiments 12A, 12B, à savoir un compartiment d'installation 12A dévolu à l'implantation d'éventuels appareillages, et un compartiment de câblage 12B dévolu à l'implantation de câbles ou de conducteurs, le corps 31, 31' de l'accessoire A1, A'1, A2, A'2 ... etc... ne s'étend transversalement qu'à travers le compartiment d'installation 12A.

En revanche, le cache 32, 32' de cet accessoire A1, A'1, A2, A'2 ... etc... s'étend, lui, préférentiellement, sur la totalité de ces compartiments 12A, 12B.

Préférentiellement, également, et cela est aussi le cas dans les formes de réalisation représentées, le corps 31, 31' d'un accessoire A1, A'1, A2, A'2 ... etc... équipant la goulotte 10 est inséré entre deux tronçons de couvercle 14A, 14'A 14B, 14'B du ou des compartiments 12A, 12B au travers duquel il s'étend, et son cache 32, 32' recouvre ces tronçons de couvercle 14A, 14'A 14B, 14'B.

Ainsi, lorsque, comme en l'espèce, le corps 31, 31' d'un tel accessoire A1, A'1, A2, A'2 ... etc... ne s'étend qu'au travers du seul compartiment d'installation 12A, il est inséré entre deux tronçons de couvercle 14A, 14'A du couvercle correspondant.

Plus précisément, lorsqu'il s'agit, comme représenté sur les figures 1 à 20, d'accessoires d'angle A1, A'1, A2, A'2, le corps 31, 31' est inséré entre deux tronçons de couvercle 14A, 14'A correspondant chacun respectivement aux deux tronçons de goulotte 10, 10' concernés et fermant chacun respectivement le compartiment d'installation 12A de ceux-ci.

Corollairement, le cache 32, 32' recouvre, en continuité, aussi bien ces tronçons de couvercle 14A, 14'A que les tronçons de couvercle 14B, 14'B fermant corollairement le compartiment de câblage 12B des tronçons de goulotte 10, 10', les tronçons de couvercle 14B, 14'B ayant été en pratique tronçonnés à la même longueur que les tronçons de couvercle 14A, 14'A.

Il résulte de ce qui précède que, normalement, pour l'équipement d'une goulotte 10 suivant l'invention, le corps 31, 31' d'un accessoire A1, A'1, A2, A'2 ... etc... s'étend d'une manière générale sur une longueur inférieure à celle suivant laquelle s'étend le cache 32, 32' qui lui est associé.

Le cache 32, 32' s'étend donc globalement en porte à faux par rapport au corps 31.

Si désiré, et cela est le cas, à titre d'exemple, dans les formes de réalisation représentées sur les figures 1 à 20, le cache 32, 32' comporte, cependant, aussi, à distance du corps 31, suivant des dispositions décrites plus en détail ultérieurement, des moyens d'engagement 37 par lesquels, pour l'affermissement de sa tenue, il est apte à venir en prise avec le socle 11 de la goulotte 10.

S'agissant, comme représenté sur les figures 1 à 20, d'un accessoire d'angle A1, A'1, A2, A'2, le corps 31, 31' d'un tel accessoire d'angle A1, A'1, A2, A'2 comporte, côte à côte, dans la forme de réalisation représentée, d'une part, un bloc 38, 38' qui est sensiblement rectiligne, et auquel appartiennent tant les moyens d'engagement 33 permettant sa solidarisation au socle 11 de la goulotte 10 que les moyens d'encliquetage 34 permettant la fixation du cache 32, 32' associé, et, d'autre part, un fût 39, 39' qui est cintré, en pratique en arc de cercle, et qui se prolonge par un piétement 40, 40' porteur d'au moins une traverse 41, 41', 42, 42' 43, 43' apte à recouvrir au moins en partie une traverse 41, 41', 42, 42', 43, 43' prévue en correspondance à cet effet sur le piétement 40, 40' du fût 39, 39' du corps 31, 31' de l'accessoire d'angle A1, A'1, A2, A'2 qui lui est associé.

En pratique, dans la forme de réalisation représentée, il y a, échelonnées en hauteur le long du piétement 40, 40' du fût 39, 39' des accessoires d'angle A1, A'1, A2, A'2, plusieurs traverses 41, 41', 42, 42', 43, 43'.

Chacune de ces traverses 41, 41', 42, 42', 43, 43' s'étend à niveau avec une aile latérale ou une cloison du socle 11 de la goulotte 10.

Plus précisément, dans la forme de réalisation représentée, trois traverses 41, 41', 42, 42', 43, 43' sont prévues.

La traverse 41, 41' s'étend à niveau avec l'aile latérale 17B du socle 11 de la goulotte 10, la traverse 42, 42' s'étend à niveau avec la cloison 29 de celui-ci, et la traverse 43, 43' s'étend à niveau avec sa cloison 28.

Par suite, ces traverses 41, 41', 42, 42', 43, 43' ont, perpendiculairement au piétement 40, 40' dont elles sont issues, des longueurs différentes, à l'image des hauteurs respectives de l'aile latérale 17A et des cloisons 28, 29 du socle 11 de la goulotte 10.

Dans la forme de réalisation représentée, chacune des traverses 41, 41', 42, 42', 43, 43' s'étend, en plan, suivant sensiblement un quart de cercle, et a, en section axiale, un profil en équerre, en étant bordée, le long de son bord libre, par un rebord 44 qui s'étend en direction du fût 39, 39' correspondant.

Dans la forme de réalisation représentée, le piétement 40, 40' du fût 39, 39' des accessoires d'angle A1, A'1 porte, en outre, transversalement, des consoles 46, 46', 47, 47', 48, 48', qui, associées chacune respectivement aux traverses 41, 41', 42, 42', 43, 43', s'étendent en direction opposée à celles-ci et sont légèrement décalées axialement en direction du fût 39, 39' par rapport à elles.

En pratique, ces consoles 46, 46', 47, 47', 48, 48' ont, en plan, un contour globalement trapézoïdal, et elles sont dépourvues de tout rebord.

La description qui précède s'applique indifféremment aux deux accessoires d'angle A1, A'1, parce que ceux-ci ont des constitutions similaires, bien que complémentaires, suivant sensiblement une disposition de type miroir.

Il en est de même pour la description qui suit.

Dans la forme de réalisation représentée, le bloc 38, 38' de ces accessoires d'angle A1, A'1 présente une paroi longitudinale 50, par laquelle il est accolé au fût 39, 39' associé, en venant en pratique de moulage d'une seule pièce avec celui-ci, deux parois transversales 52, 53, l'une supérieure, l'autre inférieure, à la faveur desquelles interviennent les moyens d'engagement 33, et une paroi de façade 54, dont le contour en plan est globalement rectangulaire, et à la faveur de laquelle interviennent les moyens d'encliquetage 34.

Dans la forme de réalisation représentée, ce bloc 38, 38' présente, en outre, parallèlement à sa paroi longitudinale 50, une autre paroi longitudinale 55.

Il a donc, globalement, une configuration en cloche, et sa concavité est tournée vers le fond 15 du socle 11 de la goulotte 10.

Sur sa paroi longitudinale 55, le bloc 38, 38' présente, en saillie, parallèlement à la paroi de façade 54, et légèrement en retrait par rapport à celle-ci, une languette 56 destinée à s'engager sous le tronçon de couvercle 14A, 14'A correspondant.

S'agissant d'accessoires d'angle A1, A'1 destinés à la constitution d'un angle 35.E extérieur, la concavité du fût 39, 39' associé est également tournée vers le fond 15 du socle 11 de la goulotte 10.

Pour que, d'un accessoire d'angle A1, A'1 à l'autre, les fûts 39, 39' puissent se recouvrir l'un l'autre, l'un de ces fûts 39, 39', en l'espèce le fût 39' de l'accessoire d'angle A'1, présente, transversalement, à distance l'une de l'autre, deux fentes 49' permettant son imbrication avec une partie décalée 49 du fût 39 de l'accessoire d'angle A1.

Enfin, dans la forme de réalisation représentée, le bloc 38, 38' du corps 31, 31' des accessoires d'angle A1, A'1 présente, localement, du côté opposé au piétement 40, 40' du fût 39, 39' de ce corps 31, 31', un retour 45 qui s'étend du côté de ce fût 39, 39', suivant sensiblement le contour de la paroi transversale 52 supérieure du bloc 38, 38'.

Dans la forme de réalisation représentée, les moyens d'engagement 33 permettant de solidariser les accessoires d'angle A1, A'1 au socle 11 de la goulotte 10 interviennent au moins pour partie par encliquetage.

Ils comportent, en effet, dans cette forme de réalisation, un crochet 57, qui, prévu en saillie sur la surface extérieure de la paroi transversale 52 supérieure du bloc 38, 38' du corps 31, 31' de ces accessoires d'angle A1, A'1, est destiné à coopérer en encliquetage avec l'aile latérale 17A du socle 11 de la goulotte 10, au lieu et place de la languette 20 du couvercle 14A de celle-ci.

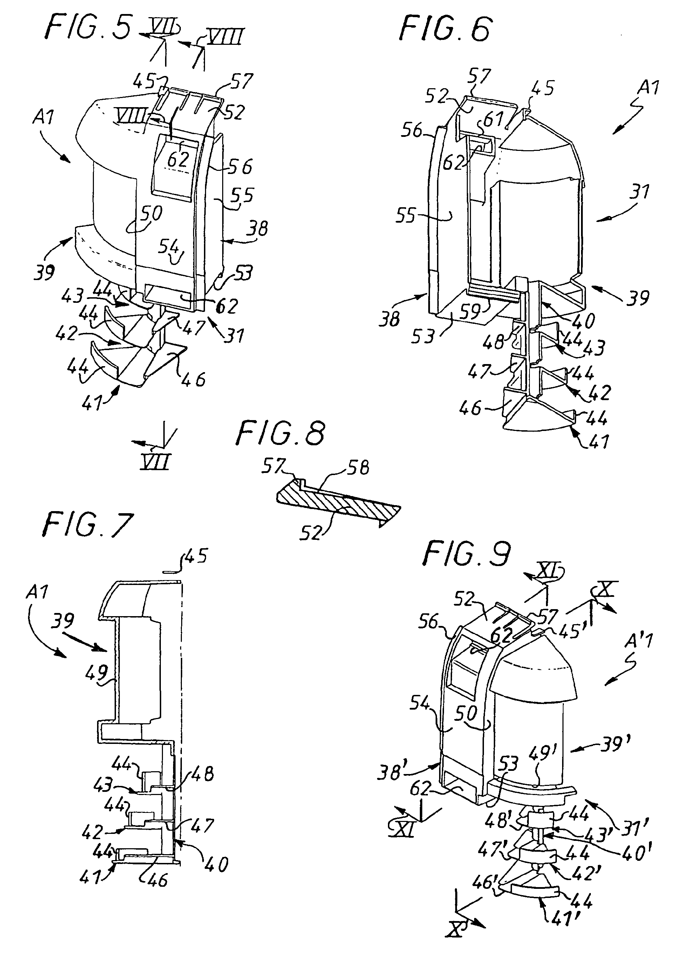

Dans la forme de réalisation représentée, la paroi transversale 52 supérieure du bloc 38, 38' se trouve renforcée, perpendiculairement au crochet 57, par deux nervures de rigidification 58 (figure 8), qui interviennent sur sa surface extérieure, à distance l'une de l'autre, dans sa zone médiane, et qui se raccordent en équerre au crochet 57.

En pratique, ce crochet 57 s'étend le long du bord libre de la paroi transversale 52 supérieure du bloc 38, 38'.

Dans la forme de réalisation représentée, les moyens d'engagement 33 comportent, également, une languette 59, qui fait saillie sur la paroi transversale 53 inférieure du bloc 38, 38', sur la surface extérieure de celle-ci, et qui est destinée à coopérer en engagement avec la console 22 du socle 11 de la goulotte 10, au lieu et place du retour 23 de la cloison de compartimentage 13 du couvercle 14A correspondant de celle-ci.

En pratique, cette languette 59 s'étend le long du bord libre de la paroi transversale 53 inférieure du bloc 38, 38'.

Ainsi, dans la forme de réalisation représentée, les moyens d'engagement 33 interviennent, pour partie, par encliquetage, par le crochet 57, et, pour partie, par simple engagement, par la languette 59.

Corollairement, les moyens d'encliquetage 34 prévus pour rapporter, sur le corps 31, 31' des accessoires d'angle A1, A'1, le cache 32, 32' associé à ce corps 31, 31' comportent, en saillie sur la surface intérieure du cache 32, 32', deux pattes d'encliquetage 60, établies à distance l'une de l'autre, parallèlement l'une à l'autre, et, en correspondance, sur le corps 31, 31, deux crans 61.

En pratique, ces crans 61 sont formés par la tranche de cheminées 62 dans lesquelles s'engagent les pattes d'encliquetage 60 du cache 32, 32'.

Corollairement, dans la forme de réalisation représentée, les moyens d'engagement 37 prévus par ailleurs pour affermir la tenue du cache 32, 32' comportent une patte d'encliquetage 63, qui fait saillie sur la surface intérieure de ce cache 32, 32' parallèlement aux pattes d'encliquetage 60 précédentes, et par laquelle ce cache 32, 32' est apte à coopérer en encliquetage avec la console 25 du socle 11 de la goulotte 10, au lieu et place de la languette 24 du couvercle 14B correspondant.

En pratique, les pattes d'encliquetage 60, 63 font saillie sur une partie 64 du cache 32, 32', qui, destinée à se superposer à la paroi de façade 54 du bloc 38, 38' du corps 31, 31' correspondant, a sensiblement une même configuration que celle-ci, et seule est cintrée une partie 65 de ce cache 32, 32' adjacente à la précédente.

Les accessoires d'angle A2, A'2 de l'angle 35.1 intérieur représenté sur les figures 14 à 20 ont des constitutions sensiblement similaires à celles des accessoires d'angle A1, A'1 précédents.

Ils ne seront donc pas décrits à nouveau ici, leurs mêmes éléments portant les mêmes références sur les figures correspondantes.

Il sera cependant indiqué, d'une part, que, à la différence de la concavité du bloc 38, 38' de leur corps 31, 31', la concavité du fût 39, 39' de ce corps 31, 31' est tournée du côté opposé au fond 15 du socle 11 de la goulotte 10, et, d'autre part, que les traverses 41, 41' 42, 42' 43, 43' du piétement 40, 40' du fût 39, 39' de leur corps 31, 31' se prolongent chacune à l'aplomb du bloc 38, 38' de ce corps 31, 31'.

En outre, la traverse 41, 41' correspondant à l'aile latérale 17B du socle 11 de la goulotte 10 est dépourvue de rebord, et le rebord 44 des traverses 42, 42' 43, 43' correspondant chacune respectivement aux cloisons 28, 29 de ce socle 11 a une hauteur relativement accentuée.

Enfin, la partie 65 cintrée de leur cache 32, 32' présente, à son extrémité supérieure, un retour 66, pour un recouvrement mutuel d'un de ces caches 32, 32' à l'autre, à la manière des traverses 41, 41', 42, 42', 43, 43, 43'.

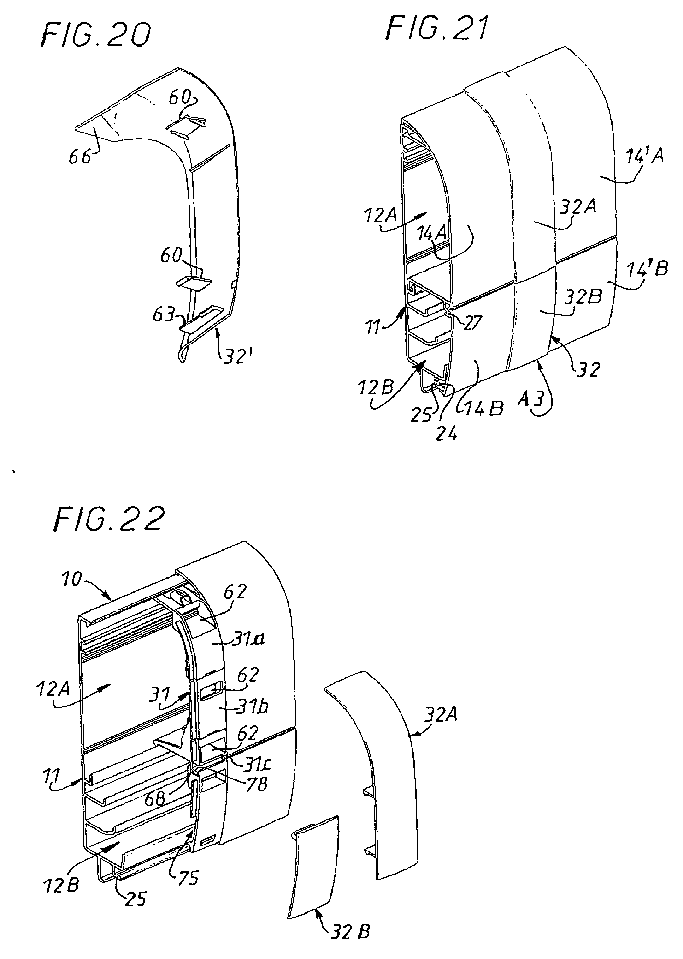

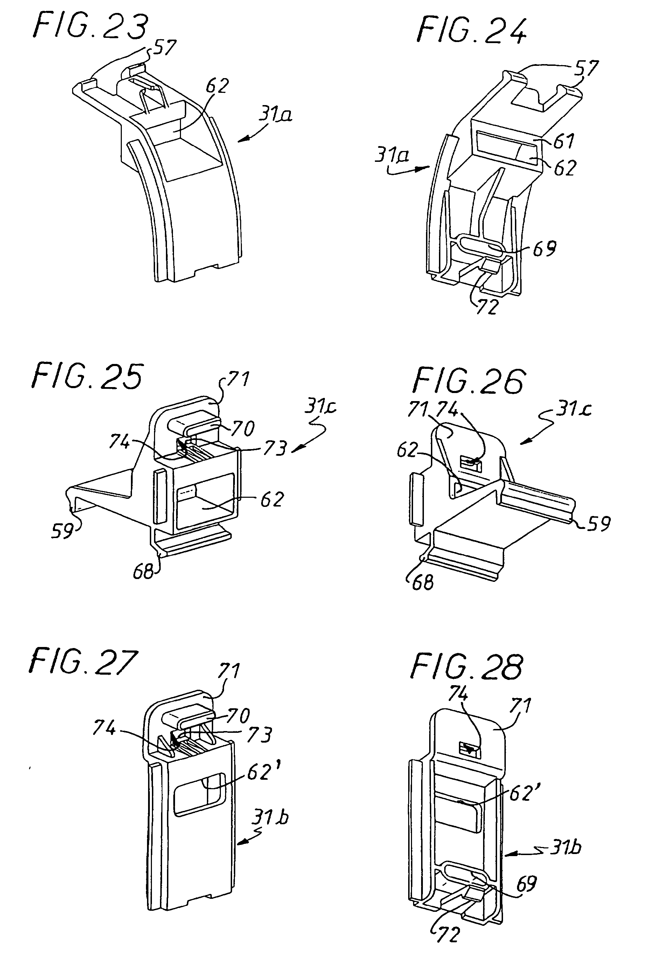

Sur les figures 21 à 32, l'accessoire A3 équipant la goulotte 10 est un joint de couvercle.

Comme précédemment, le corps 31 de cet accessoire A3 est inséré entre deux tronçons de couvercle 14A, 14'A du ou des compartiments au travers duquel il s'étend, en l'espèce le seul compartiment 12A, et son cache 32 recouvre ces tronçons de couvercle 14A, 14'A.

Mais, à la différence de ce qui précède, ceux-ci ont une même orientation.

Dans la forme de mise en oeuvre représentée, le couvercle 14B du compartiment de câblage 12B est, lui-même, fractionné en deux tronçons de couvercle 14B, 14'B, comme précédemment.

Mais, suivant une variante de mise en oeuvre non représentée, ce couvercle 14B peut, si désiré, courir en continu, sans un tel fractionnement.

Pour ce faire, le corps 31 de l'accessoire A3 est apte à recevoir ce couvercle 14B.

Autrement dit, il est apte à recevoir le couvercle associé au compartiment contigu de celui au travers duquel il s'étend.

En pratique, il présente, en saillie vers l'extérieur, longitudinalement, dans ce but, une console 68 par laquelle il est apte à intervenir au lieu et place de la console 27 du couvercle 14A associé au compartiment d'installation 12A.

Corollairement, le cache 32 correspondant est en deux parties, à savoir une partie supérieure 32A, qui correspond au compartiment d'installation 12A, et qui est la seule conservée lorsque le couvercle 14B associé au compartiment de câblage 12B court en continu, et une partie inférieure 32B, qui correspond à ce compartiment de câblage 12B, et qui est elle aussi conservée lorsque, comme représenté, le couvercle 14B correspondant est fractionné en deux tronçons de couvercle 14B, 14'B.

Dans la forme de réalisation représentée, le corps 31 de l'accessoire A3 est lui-même en au moins deux parties 31a, 31b, 31c, qui sont échelonnées transversalement sur la largeur du compartiment concerné, en l'espèce le compartiment d'installation 12A, et qui sont dûment solidarisées l'une à l'autre.

Par exemple, et tel que représenté, ce corps 31 est en trois parties 31a, 31b, 31c, à savoir, une partie supérieure 31a, une partie intermédiaire 31b, et une partie inférieure 31c.

La partie supérieure 31a comporte, d'une part, le crochet 57 destiné à coopérer en encliquetage avec l'aile latérale 17A du socle 11 de la goulotte 10, et, d'autre part, une cheminée 62 destinée à permettre l'encliquetage du cache 32, et, plus précisément, celui de la partie supérieure 32A de ce cache 32.

La partie inférieure 31c du corps 31 comporte, d'une part, la languette 59 destinée à venir en prise avec la console 22 du socle 11 de la goulotte 10, et, d'autre part, une autre cheminée 62.

La partie intermédiaire 31b du corps 31, qui forme entretoise entre la partie supérieure 31a et la partie inférieure 31c, comporte, elle aussi, dans la forme de réalisation représentée, sinon une cheminée, au moins une ouverture 62' faisant le même office.

Par suite, dans la forme de réalisation représentée, la partie supérieure 32A du cache 32 comporte, en saillie sur sa surface intérieure, et en correspondance, chacune respectivement, avec les deux cheminées 62 et l'ouverture 62', trois pattes d'encliquetage 60, au lieu de deux comme précédemment.

Entre la partie supérieure 31a du corps 31 et sa partie intermédiaire 31b interviennent des moyens d'emboîtement, la partie supérieure 31a comportant une cheminée 69 apte à recevoir à force un pion 70 prévu en saillie à cet effet sur la surface supérieure d'une platine 71 par laquelle la partie intermédiaire 31b est apte à s'engager sous l'extrémité correspondante de cette partie supérieure 31a.

Par exemple, et tel que représenté, la cheminée 69 a, en section transversale, un contour allongé longitudinalement en boutonnière, suivant la largeur de la partie supérieure 31a et de la partie intermédiaire 31b, et il en est de même pour le pion 70.

Entre la partie supérieure 31a du corps 31 et sa partie intermédiaire 31b interviennent, en outre, dans la forme de réalisation représentée, des moyens d'encliquetage, la partie supérieure 31a présentant, en saillie, à cet effet, sur sa surface inférieure, une patte d'encliquetage 72, et la partie intermédiaire 31b présentant, en correspondance, un cran 73.

Par exemple, et tel que représenté, ce cran 73 est formé par l'un des bords d'une ouverture 74 ajourant la platine 71 de la partie intermédiaire 31b, parallèlement au pion 70, et à distance de celui-ci.

Dans la forme de réalisation représentée, des moyens d'engagement et des moyens d'encliquetage de même type que les précédents interviennent entre la partie intermédiaire 31b et la partie inférieure 31c du corps 31.

Plus précisément, la partie intermédiaire 31b comporte, elle aussi, une cheminée 69 et une patte d'encliquetage 72, et, en correspondance, la partie inférieure 31c comporte, sur une platine 71, un pion 70 et une ouverture 74 dont l'un des bords forme un cran 73.

Ainsi, la partie supérieure 31a du corps 31 peut indifféremment être accouplée avec la partie intermédiaire 31b ou avec la partie inférieure 31c, et, de même, sa partie inférieure 31c peut indifféremment être accouplée avec la partie intermédiaire 31b ou la partie supérieure 31a.

Ainsi qu'il est aisé de le comprendre, la partie intermédiaire 31b est, ou non, mise en oeuvre, suivant la largeur de la goulotte 10.

Dans la forme de réalisation représentée, et en raison de ce que l'aile latérale 17B du socle 11 de la goulotte 10 a, en l'espèce, une hauteur suffisante, l'accessoire A3 comporte, également, en sus de son corps 31, ou corps principal, et aligné avec celui-ci, un autre corps 75, ou corps auxiliaire, qui s'étend au travers d'au moins un des compartiments contigus à celui au travers duquel s'étend le corps principal 31, et qui, comme celui-ci, comporte des moyens d'engagement 77 par lesquels il est apte à être solidarisé au socle 11 de la goulotte 10.

En pratique, le corps 31 s'étendant au travers du compartiment d'installation 12A, le corps auxiliaire 75 s'étend au travers du seul compartiment de câblage 12B.

Les moyens d'engagement 77 comportent, à l'extrémité supérieure du corps auxiliaire 75, une rainure 78, qui s'étend longitudinalement, le long de son bord transversal correspondant, et par laquelle il est apte à venir en prise avec la console 68 que comporte le corps principal 31, en étant ainsi solidarisée au socle 11 de la goulotte 10 par l'intermédiaire de ce dernier.

Les moyens d'engagement 77 comportent, également, dans la forme de réalisation représentée, à l'extrémité inférieure du corps auxiliaire 75, en saillie sur sa surface intérieure, au moins une languette 79 apte à coopérer en encliquetage avec la console 25 du socle 11 de la goulotte 10, à la manière de la languette 24 du couvercle 14B associé au compartiment de câblage 12B de celle-ci.

Par exemple, et tel que représenté, deux languettes 79 sont prévues, à distance l'une de l'autre, et dans l'alignement l'une de l'autre.

Ainsi qu'on le notera, le corps auxiliaire 75 s'étend, en pont, à la partie supérieure du compartiment de câblage 12B, sans empiéter de manière notable sur le volume utile de celui-ci.

Ainsi qu'il est aisé, par ailleurs, de le comprendre, la partie supérieure 32A du cache 32 correspond au seul corps principal 31, et sa partie inférieure 32B au seul corps auxiliaire 75.

Par suite, le corps auxiliaire 75 comporte lui aussi des cheminées 62 ou ouverture 62', pour coopération avec des pattes d'encliquetage 60 prévues à cet effet sur la partie inférieure 32B du cache 32.

On notera qu'il est possible de disposer le corps auxiliaire 75 ailleurs que dans l'alignement du corps 31, par exemple si l'on souhaite décaler les parties 32A et 32B du cache 32.

Dans une variante non représentée, on n'utilise pas de corps auxiliaire 75 et l'on remplace le cache 32 en deux parties 32A et 32B par un cache d'un seul tenant venant se fixer sur le corps 31 et sur l'aile latérale 17B du socle 11.

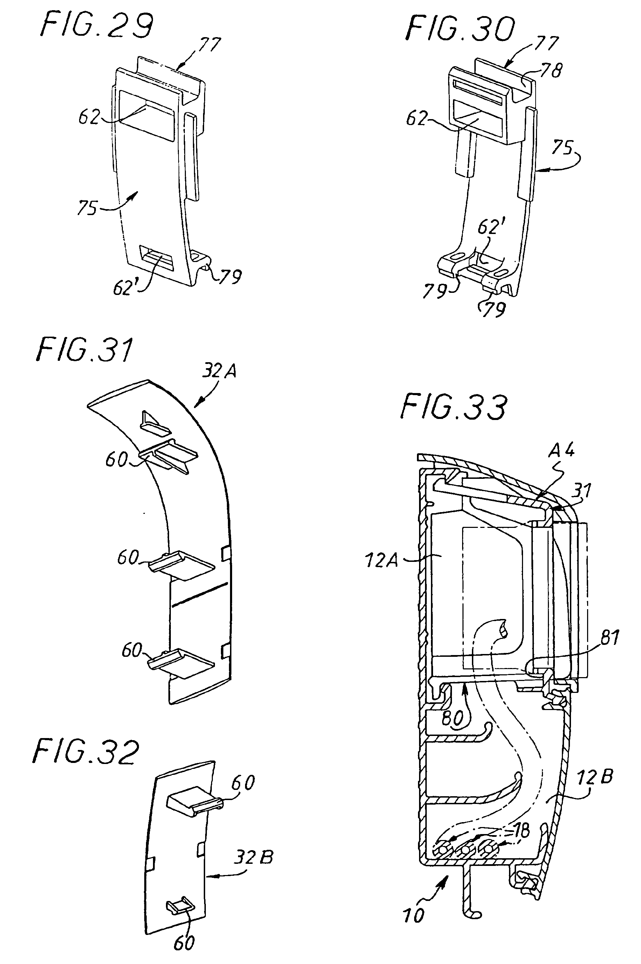

Sur la figure 33, l'accessoire A4 équipant la goulotte 10 est un accessoire de passage, propre à permettre à l'un ou l'autre des câbles ou conducteurs 18 qui circulent dans le compartiment de câblage 12B d'être introduits localement dans le compartiment d'installation 12A.

Suivant des dispositions qui, ne relevant pas par elles-mêmes de la présente invention, ne seront pas décrites plus en détail ici, le corps 31 de cet accessoire A4 comporte au moins une paroi longitudinale 80, par laquelle il est apte à se substituer localement à la cloison de compartimentage 13, et qui est ajourée par au moins un passage 81, pour la traversée recherchée pour un ou plusieurs câbles ou conducteurs 18.

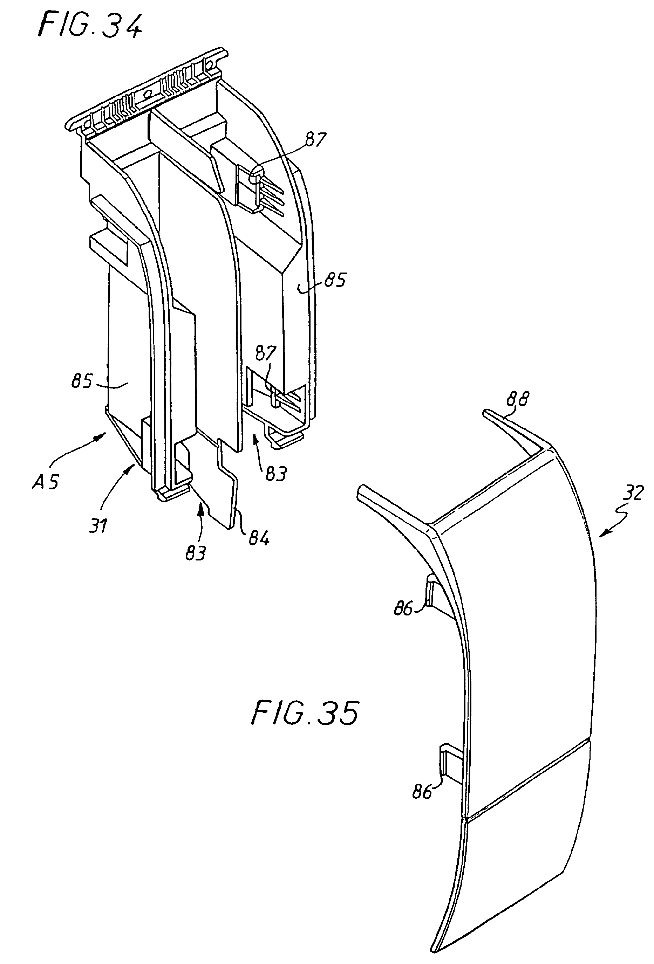

Sur les figures 34 et 35 sont représentés, d'une part, le corps 31 d'un accessoire A5 destiné à former une dérivation, et, d'autre part, le cache 32 à rapporter sur ce corps 31.

Le corps 31, qui est destiné à intervenir transversalement dans le compartiment d'installation 12A, entre deux tronçons de couvercle 14A, 14'A, est fragmenté intérieurement, transversalement par rapport à la goulotte 10, en au moins deux rigoles 83, par au moins une paroi interne 84.

Par exemple, et tel que représenté, seule une paroi interne 84 est prévue, et celle-ci s'étend parallèlement aux parois latérales 85 du corps 31, à mi-distance de ces dernières.

Débouchant à l'une et l'autre de leurs extrémités, les rigoles 83 permettent à un ou plusieurs des câbles ou conducteurs 18 d'être dérivés du compartiment de câblage 12B et de déboucher latéralement sur le flanc supérieur du compartiment d'installation 12A, où ils peuvent ensuite être repris, de manière traditionnelle, par une autre goulotte, non représentée, communément dite goulotte de dérivation, disposée par exemple en T par rapport à la goulotte 10, alors dite goulotte principale.

Dans la forme de réalisation représentée, le cache 32 comporte, le long de chacun de ses bords latéraux, deux pattes d'encliquetage 86 pour coopération avec des crans 87 prévus en correspondance en saillie sur la surface intérieure des parois latérales 85 du corps 31.

Ce cache 32 présente, en outre, à son extrémité supérieure, une ouverture 88, pour permettre la sortie effective d'un ou plusieurs câbles ou conducteurs 18.

Suivant des dispositions traditionnelles, cette ouverture 88 peut être partiellement occultée par des opercules défonçables permettant d'en ajuster la hauteur et/ou la largeur en fonction de la goulotte de dérivation correspondante.

## Revendications

1. Goulotte, qui, d'une part, est du genre comportant un socle (11) dont le volume intérieur est fragmenté transversalement en au moins deux compartiments (12A, 12B) qui courent longitudinalement et qui sont séparés l'un de l'autre par au moins une cloison de compartimentage (13) et des couvercles (14A, 14B) associés chacun respectivement à ces compartiments (12A, 12B), et qui, d'autre part, est équipée d'au moins un accessoires (A1, A'1, A2, A'2 ... etc...) qui s'étend transversalement par rapport à ses compartiments (12A, 12B) et qui comporte, sous la forme de pièces distinctes, un corps (31, 31') et un cache (32, 32'), avec, sur le corps (31, 31'), des moyens d'engagement (33) par lesquels cet accessoire (A1, A'1, A2, A'2 ... etc...) est apte à être solidarisé au socle (11) de la goulotte (10), et, entre le corps (31, 31') et le cache (32, 32'), des moyens d'encliquetage (34) par lesquels le cache (32, 32') est apte à être rapporté sur le corps (31, 31'), **caractérisée en ce que** le corps (31, 31') de l'accessoire (A1, A1, A2, A'2 ... etc...) ne s'étend transversalement qu'à travers un nombre limité de compartiments (12A, 12B) sur une longueur inférieure à celle suivant laquelle s'étend son cache.

2. Goulotte suivant la revendication 1, **caractérisée en ce que**, le volume intérieur du socle (11) étant fragmenté en deux compartiments (12A, 12B), à savoir un compartiment d'installation (12A) dévolu à l'implantation d'éventuels appareillages, et un compartiment de câblage (12B) dévolu à l'implantation de câbles ou de conducteurs (18), le corps (31, 31') de l'accessoire (A1, A'1, A2, A'2 ... etc...) ne s'étend transversalement qu'à travers le compartiment d'installation (12A).

3. Goulotte suivant l'une quelconque des revendications 1, 2, **caractérisée en ce que** le cache (32, 32') de l'accessoire (A1, A'1, A2, A'2 ... etc...) s'étend sur la totalité de ses compartiments (12A, 12B).

4. Goulotte suivant l'une quelconque des revendications 1 à 3, **caractérisée en ce que** le corps (31, 31') de l'accessoire (A1, A'1, A2, A'2 ... etc...) est inséré entre deux tronçons de couvercle (14A, 14'A) associés au ou aux compartiments au travers du ou desquels il s'étend, et son cache (32, 32') recouvre ces tronçons de couvercle (14A, 14'A).

5. Goulotte suivant l'une quelconque des revendications 1 à 4, **caractérisée en ce que** la cloison de compartimentage (13) appartenant à l'un des couvercles (14A, 14B), le corps (31) de l'accessoire (A4) comporte au moins une paroi longitudinale (80), par laquelle il est apte à se substituer localement à cette cloison de compartimentage (13), et qui est ajourée par au moins un passage (81).

6. Goulotte suivant l'une quelconque des revendications 1 à 5, **caractérisée en ce que** le corps (31, 31') de l'accessoire (A1, A'1, A2, A'2 ... etc...) est apte à recevoir le couvercle (14B) associé au ou aux compartiment(s) (12B) contigu(s) de celui ou de ceux au travers du ou desquels il s'étend.

7. Goulotte suivant l'une quelconque des revendications 1 à 6, **caractérisée en ce que**, l'accessoire (A3) étant un joint de couvercle, son corps (31) est en au moins deux parties (31a, 31b, 31c), qui sont échelonnées transversalement sur la largeur du ou des compartiment(s) (12A) concerné(s), et qui sont solidarisées l'une à l'autre.

8. Goulotte suivant la revendication 7, **caractérisée en ce que** l'accessoire (A3) comporte également un corps auxiliaire (75), qui s'étend au travers d'au moins un compartiment contigu de celui ou de ceux au travers du ou desquels s'étend son premier corps (31) ou corps principal, et qui, comme celui-ci, comporte des moyens d'engagement (77) par lesquels il est apte à être solidarisé au socle (11).

9. Goulotte suivant la revendication 8, **caractérisée en ce que** le corps auxiliaire (75) de l'accessoire (A3) est aligné avec son corps principal (31).

10. Goulotte suivant l'une quelconque des revendications 1 à 6, **caractérisée en ce que**, l'accessoire (A4) étant un accessoire de passage, son corps (31) comporte au moins une paroi longitudinale (80) par laquelle il est apte à se substituer localement à la cloison de compartimentage (13), et qui est ajourée par au moins un passage (81).

11. Goulotte suivant l'une quelconque des revendications 1 à 6, **caractérisée en ce que**, l'accessoire (A5) étant un accessoire de dérivation, son corps (31) est fragmenté intérieurement, transversalement par rapport à la goulotte, en au moins deux rigoles (83), par au moins une paroi interne (84).

12. Goulotte suivant l'une quelconque des revendications 1 à 11, **caractérisée en ce que** le cache (32) de l'accessoire (A1, A'1, A2, A'2 ... etc...) est en deux parties (32A, 32B).

13. Accessoire pour l'équipement d'une goulotte (10) du genre comportant au moins un corps (31, 31'), par lequel il est apte à être solidarisé au socle (11) de cette goulotte (10), et au moins un cache (32, 32'), qui est apte à être rapporté sur le corps (31, 31'), **caractérisé en ce que**, pour l'équipement d'une goulotte (10) conforme à l'une quelconque des revendications 1 à 12, le corps (31, 31') s'étend sur une longueur inférieure à celle suivant laquelle s'étend le cache (32, 32').

14. Accessoire suivant la revendication 13, **caractérisé en ce que** le cache (32, 32') comporte, aussi, à distance du corps (31, 31'), des moyens d'engagement (37) par lesquels il est apte à venir en prise avec le socle (11) de la goulotte (10).

15. Accessoire suivant l'une quelconque des revendications 13, 14, **caractérisé en ce que**, s'agissant d'un accessoire d'angle (A1, A'1, A2, A'2), le corps (31, 31') comporte, côte à côte, un bloc (38, 38'), qui est sensiblement rectiligne, et auquel appartiennent tant les moyens d'engagement (33) que les moyens d'encliquetage (34), et un fût (39, 39'), qui est cintré, et qui se prolonge par un piétement (40, 40') porteur d'au moins une traverse (41, 41', 42, 42', 43, 43') apte à recouvrir au moins en partie une traverse (41, 41', 42, 42', 43, 43') prévue en correspondance à cet effet sur le piétement (40, 40') du fût (39, 39') de l'accessoire d'angle (A1, A'1, A2, A'2) associé.

16. Accessoire suivant la revendication 15, **caractérisé en ce que** la traverse (41, 41', 42, 42', 43, 43') a, en section axiale, un profil en équerre.

17. Accessoire suivant l'une quelconque des revendications 15, 16, **caractérisé en ce que** s'agissant d'un accessoire d'angle (A2, A'2) pour angle (35.1) intérieur, la traverse (41, 41', 42, 42', 43, 43') se prolonge à l'aplomb du bloc (38, 38').

18. Accessoire suivant l'une quelconque des revendications 15 à 17, **caractérisé en ce que** la traverse (41, 41', 42, 42', 43, 43') s'étend à niveau avec une aile latérale (17B) ou une cloison (28, 29) du socle (11) de la goulotte (10).

19. Accessoire suivant l'une quelconque des revendications 15 à 18, **caractérisé en ce qu'**il y a, échelonnées en hauteur le long du piétement (40, 40'), plusieurs traverses (41, 41', 42, 42', 43, 43').

20. Accessoire suivant la revendication 13, **caractérisé en ce que**, s'agissant d'un joint de couvercle, le corps (31) est en au moins deux parties (31a, 31b, 31c) aptes à être successivement solidarisées l'une à l'autre.

21. Accessoire suivant la revendication 20, **caractérisé en ce qu'**il comporte, en sus de son corps (31), ou corps principal, et aligné avec celui-ci, un autre corps (75), ou corps auxiliaire.

22. Accessoire suivant la revendication 13, **caractérisé en ce que**, s'agissant d'un accessoire de passage, le corps (31) comporte au moins une paroi longitudinale (80) ajourée par au moins un passage (81).

23. Accessoire suivant la revendication 13, **caractérisé en ce que**, s'agissant d'un accessoire de dérivation, le corps (31) est fragmenté intérieurement en au moins deux rigoles (83) par au moins une paroi interne (84).

24. Accessoire suivant l'une quelconque des revendications 13 à 23, **caractérisé en ce que** le cache (32, 32') est en deux parties (32A, 32B).

## Claims

1. A duct which on the one hand is of the kind comprising a base (11) of which the internal volume is transversely divided into at lest two compartments (12A, 12B) which extend longitudinally and which are separated from each other by at least one compartmentation partition (13) and covers (14A, 14B) each respectively associated with said compartments (12A, 12B), and which on the other hand is equipped with at least one accessory (A1, A'1, A2, A'2... etc...) which extends transversely with respect to its compartments (12A, 12B) and which comprises in the form of separate parts a body (31, 31') and a cover member (32, 32'), with, on the body (31, 31'), engagement means (33) by which said accessory (A1, A'1, A2, A'2 ... etc...) is capable of being fixed to the base (11) of the duct (10), and, between the body (31, 31') and the cover member (32, 32'), latching means (34) by which the cover member (32, 32') is capable of being fitted on to the body (31, 31'), **characterised in that** the body (31, 31') of the accessory (A1, A'1, A2, A'2 ... etc...) extends transversely only through a limited number of compartments (12A, 12B) over a length less than that along which its cover member extends.

2. A duct according to claim 1 **characterised in that**, the internal volume of the base (11) being divided into two compartments (12A, 12B), namely an installation compartment (12A) provided for installation of possible items of equipment and a cabling compartment (12B) provided for installation of cables or conductors (18), the body (31, 31') of the accessory (A1, A'1, A2, A'2 ... etc...) extends transversely only through the installation compartment (12A).

3. A duct according to either one of claims 1 and 2 **characterised in that** the cover member (32, 32') of the accessory (A1, A'1, A2, A'2 ... etc...) extends over all of its compartments (12A, 12B).

4. A duct according to any one of claims 1 to 3 **characterised in that** the body (31, 31') of the accessory (A1, A'1, A2, A'2 ... etc...) is inserted between two cover portions (14A, 14'A) associated with the compartment or compartments through which it extends, and its cover member (32, 32') covers said cover portions (14A, 14'A).

5. A duct according to any one of claims 1 to 4 **characterised in that** the compartmentation partition (13) belonging to one of the covers (14A, 14B), the body (31) of the accessory (A4) comprises at least one longitudinal wall (80), by which it is capable of locally replacing said compartmentation partition (13) and which is apertured by at least one passage (81).

6. A duct according to any one of claims 1 to 5 **characterised in that** the body (31, 31') of the accessory (A1, A'1, A2, A'2 ... etc...) is capable of receiving the cover (14B) associated with the compartment or compartments (12B) which are contiguous with that or those through which it extends.

7. A duct according to any one of claims 1 to 6 **characterised in that**, the accessory (A3) being a cover joint, its body (31) is in at least two parts (31a, 31b, 31c) which are staggered transversely over the width of the compartment or compartments (12A) in question and which are fixed to each other.

8. A duct according to claim 7 **characterised in that** the accessory (A3) also comprises an auxiliary body (75) which extends through at least one compartment contiguous with that or those through which its first body (31) or main body extends and which like same comprises engagement means (77) by which it is capable of being fixed to the base (11).

9. A duct according to claim 8 **characterised in that** the auxiliary body (75) of the accessory (A3) is aligned with its main body (31).

10. A duct according to any one of claims 1 to 6 **characterised in that**, the accessory (A4) being a passage accessory, its body (31) comprises at least one longitudinal wall (80) by which it is capable of locally replacing the compartmentation partition (13) and which is apertured by at least one passage (81).

11. A duct according to any one of claims 1 to 6 **characterised in that**, the accessory (A5) being a branching accessory, its body (31) is internally divided transversely with respect to the duct into at least two channels (83) by at least one internal wall (84).

12. A duct according to any one of claims 1 to 11 **characterised in that** the cover member (32) of the accessory (A1, A'1, A2, A'2 ... etc...) is in two parts (32A, 32B).

13. An accessory for fitting to a duct (10) of the kind comprising at least one body (31, 31') by which it is capable of being fixed to the base (11) of said duct (10), and at least one cover member (32, 32') which is capable of being fitted on to the body (31, 31'), **characterised in that**, for equipping a duct (10) according to any one of claims 1 to 12, the body (31, 31') extends over a length less than that along which the cover member (32, 32') extends.

14. An accessory according to claim 13 **characterised in that** the cover member (32, 32') also comprises at a spacing from the body (31, 31') engagement means (37) by which it is capable of coming into engagement with the base (11) of the duct (10).

15. An accessory according to either one of claims 13 and 14 **characterised in that**, being an angle accessory (A1, A'1, A2, A'2), the body (31, 31') comprises in side-by-side relationship a block (38, 38') which is substantially rectilinear and to which belong both the engagement means (33) and the latching means (34), and a pillar portion (39, 39') which is curved and which is prolonged by a support base (40, 40') carrying at least one transverse member (41, 41', 42, 42', 43, 43') capable of at least partially covering a transverse member (41, 41', 42, 42', 43, 43') provided in corresponding relationship for that purpose on the support base (40, 40') of the pillar portion (39, 39') of the associated angle accessory (A1, A'1, A2, A'2).

16. An accessory according to claim 15 **characterised in that** the transverse member (41, 41', 42, 42', 43, 43') has a right-angled profile in axial section.

17. An accessory according to any one of claims 15 and 16 **characterised in that**, being an angle accessory (A2, A'2) for an internal angle (35.1), the transverse member (41, 41', 42, 42', 43, 43') is prolonged in line with the block (38, 38').

18. An accessory according to any one of claims 15 to 17 **characterised in that** the transverse member (41, 41', 42, 42', 43, 43') extends level with a lateral wing (17B) or a partition (28, 29) of the base (11) of the duct (10).

19. An accessory according to any one of claims 15 to 18 **characterised in that** staggered in respect of height along the support base (40, 40') there are a plurality of transverse members (41, 41', 42, 42', 43, 43').

20. An accessory according to claim 13 **characterised in that**, being a cover joint, the body (31) is in at least two parts (31a, 31b, 31c) capable of being successively fixed to each other.

21. An accessory according to claim 20 **characterised in that** in addition to its body (31) or main body and aligned therewith, it comprises another body (75) or auxiliary body.

22. An accessory according to claim 13 **characterised in that**, being a passage accessory, the body (31) comprises at least one longitudinal wall (80) apertured by at least one passage (81).

23. An accessory according to claim 13 **characterised in that**, being a branching accessory, the body (31) is internally divided into at least two channels (83) by at least one internal wall (84).

24. An accessory according to any one of claims 13 to 23 **characterised in that** the cover member (32, 32') is in two parts (32A, 32B).

## Patentansprüche

1. Kabelkanal, der einerseits des Typs ist mit einem Sockel (11), dessen Innenraum quer in wenigstens zwei Kammern (12A, 12B) unterteilt ist, die längs verlaufen und die durch wenigstens eine Trennwand (13) voneinander getrennt sind, und mit jeweils diesen Kammern (12A, 12B) zugeordneten Deckeln (14A, 14B), und der andererseits mit wenigstens einem Zubehör (A1, A'1, A2, A'2... usw.) ausgestattet ist, das bezüglich der Kammern (12A, 12B) quer verläuft und in Form von separaten Teilen einen Korpus (31, 31') und eine Abdeckung (32, 32') umfasst, mit Eingriffsmitteln (33) auf dem Korpus (31, 31'), durch die das Zubehör (A1, A'1, A2, A'2... usw.) mit dem Sockel (11) des Kabelkanals (10) fest verbunden zu werden vermag, und Rastmitteln (34) zwischen dem Korpus (31, 31') und der Abdeckung (32, 32'), durch die die Abdeckung (32, 32') auf den Korpus (31, 31') aufgesetzt zu werden vermag, **dadurch gekennzeichnet, dass** sich der Korpus (31, 31') des Zubehörs (A1, A'1, A2, A'2... usw.) quer nur über eine begrenzte Anzahl von Kammern (12A, 12B) über eine Länge erstreckt, die geringer ist als diejenige, über die die Abdeckung verläuft.

2. Kabelkanal nach Anspruch 1,
**dadurch gekennzeichnet, dass** sich der Korpus (31, 31') des Zubehörs (A1, A'1, A2, A'2... usw.), da der Innenraum des Sockels (11) in zwei Kammern (12A, 12B) unterteilt ist, nämlich einer dem Einbau möglicher Installationsgeräte vorbehaltenen Installationskammer (12A) und einer dem Einbringen von Kabeln oder Leitern (18) vorbehaltenen Verdrahtungskammer (12B), quer nur über die Installationskammer (12A) erstreckt.

3. Kabelkanal nach einem der Ansprüche 1, 2,
**dadurch gekennzeichnet, dass** sich die Abdeckung (32, 32') des Zubehörs (A1, A'1, A2, A'2... usw.) über die Gesamtheit der Kammern (12A, 12B) estreckt.

4. Kabelkanal nach einem der Ansprüche 1 bis 3,
**dadurch gekennzeichnet, dass** der Korpus (31, 31') des Zubehörs (A1, A'1, A2, A'2... usw.) zwischen zwei Deckelabschnitten (14A, 14'A) eingefügt ist, die der oder den Kammern zugeordnet sind, über die dieser sich erstreckt, und die Abdeckung (32, 32') diese Deckelabschnitte (14A, 14B) überdeckt.

5. Kabelkanal nach einem der Ansprüche 1 bis 4,
**dadurch gekennzeichnet, dass** der Korpus (31) des Zubehörs (A4), da die Trennwand (13) einem der Deckel (14A, 14B) zugehörig ist, wenigstens eine Längswand (80) aufweist, mit der er stellenweise die Trennwand (13) ersetzen kann und die durch wenigstens einen Durchlass (81) durchbrochen ist.

6. Kabelkanal nach einem der Ansprüche 1 bis 5,
**dadurch gekennzeichnet, dass** der Korpus (31, 31') des Zubehörs (A1, A'1, A2, A'2... usw.) den Deckel (14B) aufzunehmen vermag, welcher der oder den Kammern (12B) zugeordnet ist, die neben der- oder denjenigen liegt bzw. liegen, über die dieser sich erstreckt.

7. Kabelkanal nach einem der Ansprüche 1 bis 6,
**dadurch gekennzeichnet, dass** der Korpus (31), da das Zubehör (A3) eine Deckelverbindung ist, aus wenigstens zwei Teilen (31a, 31b, 31c) besteht, die quer über die Breite der betreffenden Kammer(n) (12A) verteilt und miteinander fest verbunden sind.

8. Kabelkanal nach Anspruch 7,
**dadurch gekennzeichnet, dass** das Zubehör (A3) auch einen zusätzlichen Korpus (75) aufweist, der sich über wenigstens eine Kammer erstreckt, die neben der- oder denjenigen liegt, über die sich der erste Korpus (31) oder Hauptkorpus erstreckt, und der wie dieser Eingriffsmittel (77) aufweist, durch die er mit dem Sockel (11) fest verbunden zu werden vermag.

9. Kabelkanal nach Anspruch 8,
**dadurch gekennzeichnet, dass** der zusätzliche Korpus (75) des Zubehörs (A3) mit dem Hauptkorpus (31) in einer Reihe ausgerichtet ist.

10. Kabelkanal nach einem der Ansprüche 1 bis 6,
**dadurch gekennzeichnet, dass** der Korpus (31), da das Zubehör (A4) ein Durchlasszubehör ist, wenigstens eine Längswand (80) umfasst, durch die er stellenweise die Trennwand (13) zu ersetzen vermag und die durch wenigstens einen Durchlass (81) durchbrochen ist.

11. Kabelkanal nach einem der Ansprüche 1 bis 6,
**dadurch gekennzeichnet, dass** der Korpus (31), da das Zubehör (A5) ein Abzweigungszubehör ist, innen durch wenigstens eine Innenwand (84) quer bezüglich des Kabelkanals in wenigstens zwei Rinnen (83) unterteilt ist.

12. Kabelkanal nach einem der Ansprüche 1 bis 11,
**dadurch gekennzeichnet, dass** die Abdeckung (32) des Zubehörs (A1, A'1, A2, A'2... usw.) aus zwei Teilen (32A, 32B) besteht.

13. Zubehör zur Ausstattung eines Kabelkanals (10) des Typs mit wenigstens einem Korpus (31, 31'), durch den es mit dem Sockel (11) des Kabelkanals (10) fest verbunden zu werden vermag, und mit wenigstens einer Abdeckung (32, 32'), die auf den Korpus (31, 31') aufgesetzt zu werden vermag,
**dadurch gekennzeichnet, dass** sich der Korpus (31, 31'), zur Ausstattung eines Kabelkanals (10) nach einem der Ansprüche 1 bis 12, über eine Länge erstreckt, die geringer ist als diejenige, über die die Abdeckung (32, 32') verläuft.

14. Zubehör nach Anspruch 13,
**dadurch gekennzeichnet, dass** die Abdeckung (32, 32') mit Abstand zum Korpus (31, 31') gleichfalls Eingriffsmittel (37) aufweist, durch die sie mit dem Sockel (11) des Kabelkanals (10) in Eingriff zu gelangen vermag.

15. Zubehör nach einem der Ansprüche 13, 14,
**dadurch gekennzeichnet, dass** der Korpus (31, 31'), da es sich um ein Eckzubehör (A1, A'1, A2, A'2) handelt, nebeneinanderliegend einen Block (38, 38'), der im Wesentlichen gerade ist und dem sowohl die Eingriffsmittel (33) als auch die Rastmittel (34) zugehörig sind, und einen Schaft (39, 39') umfasst, der gewölbt ist und der sich in einem Gestell (40, 40') fortsetzt, das wenigstens mit einer Querstrebe (41, 41', 42, 42', 43, 43') versehen ist, die wenigstens zum Teil eine Querstrebe (41, 41', 42, 42', 43, 43') überdeckt, die in Übereinstimmung hierzu auf dem Gestell (40, 40') des Schafts (39, 39') des zugeordneten Eckzubehörs (A1, A'1, A2, A'2) vorgesehen ist.

16. Zubehör nach Anspruch 15,
**dadurch gekennzeichnet, dass** die Querstrebe (41, 41', 42, 42', 43, 43') im axialen Schnitt ein rechtwinkliges Profil hat.

17. Zubehör nach einem der Ansprüche 15, 16,
**dadurch gekennzeichnet, dass** sich die Querstrebe (41, 41', 42, 42', 43, 43'), da es
sich um ein Eckzubehör (A2, A'2) für eine Innenecke (35,1) handelt, lotrecht zu dem Block (38, 38') fortsetzt.

18. Zubehör nach einem der Ansprüche 15 bis 17,
**dadurch gekennzeichnet, dass** die Querstrebe (41, 41', 42, 42', 43, 43') höhengleich mit einem Längsschenkel (17B) oder einer Wand (28, 29) des Sockels (11) des Kabelkanals (10) verläuft.

19. Zubehör nach einem der Ansprüche 15 bis 18,
**dadurch gekennzeichnet, dass** entlang des Gestells (40, 40') in der Höhe verteilt mehrere Querstreben (41, 41', 42, 42', 43, 43') vorhanden sind.

20. Zubehör nach Anspruch 13,
**dadurch gekennzeichnet, dass** der Korpus (31), da es sich um eine Deckelverbindung handelt, aus wenigstens zwei Teilen (31a, 31b, 31c) besteht, die aufeinanderfolgend miteinander fest verbunden zu werden vermögen.

21. Zubehör nach Anspruch 20,
**dadurch gekennzeichnet, dass** es zusätzlich zu seinem Korpus (31) oder Hauptkorpus, und mit diesem in einer Reihe ausgerichtet, einen weiteren Korpus (75) oder zusätzlichen Korpus umfasst.

22. Zubehör nach Anspruch 13,
**dadurch gekennzeichnet, dass** der Korpus (31), da es sich um ein Durchlasszubehör handelt, wenigstens eine Längswand (80) umfasst, die mit wenigstens einem Durchlass (81) durchbrochen ist.

23. Zubehör nach Anspruch 13,
**dadurch gekennzeichnet, dass** der Korpus (31), da es sich um ein Abzweigungszubehör handelt, innen durch wenigstens eine Innenwand (84) in wenigstens zwei Rinnen (83) unterteilt ist.

24. Zubehör nach einem der Ansprüche 13 bis 23,
**dadurch gekennzeichnet, dass** die Abdeckung (32, 32') aus zwei Teilen (32A, 32B besteht.
